# EUROPEAN PATENT SPECIFICATION

(11) **EP 4 365 101 B1**
(45) Date of publication and mention of the grant of the patent: **08.04.2026**
(21) Application number: 22205166.6
(22) Date of filing: 02.11.2022
(51) Int. Cl.: B65D 59/00, F16L 57/00, E21B 17/042

(54) **THREADED PIPE END PROTECTOR**
GEWINDESCHUTZ EINES ROHRENDES
PROTECTEUR D'EXTRÉMITÉ DE TUYAU FILETÉ

(43) Date of publication of application: 08.05.2024
(73) Proprietor: Vallourec Oil and Gas France, 59620 Aulnoye-Aymeries (FR)
(72) Inventor: MAGALLANES, Montalvo Gerardo Manuel, 91697 Valente Diaz, Veracruz (MX); NIETO, Martinez Gustavo, 91697 Valente Diaz, Veracruz (MX); MORALES, Morales Lorenzo, 91697 Valente Diaz, Veracruz (MX); REBOLLEDO, Rivera Irvink, 91697 Valente Diaz, Veracruz (MX)
(74) Representative: Mbacke, Mactar

(56) References cited:
- GB-A- 2 093 426
- JP-A- H02 113 197
- US-A- 2 073 389
- US-A- 2 225 754
- US-A- 4 157 100
- US-A- 4 429 719
- US-A- 4 655 256
- US-A1- 2021 172 560
- US-A1- 2022 003 049

## Description

### Technical Field

The invention relates to tubular threaded components and more precisely protectors to protect the end of these components, such as a protector for a tubular threaded element for drilling, exploitation of hydrocarbon wells, transport of oil and gas, transport or storage of hydrogen, carbon capture or geothermal energy.

### Prior Art Background

"Tubular component" here means any element or accessory used to drill or operate a well and comprising at least one threaded end, also called a connection or connector, and intended to be joined by a thread to another tubular component to form with that other component a tubular threaded joint. The tubular component can be a tubular threaded component.

The at least one threaded end is complementary allowing the connection of a male tubular component end ("Pin") and a female tubular component end ("Box") between them. Therefore, there is a male threaded end and a female threaded end.

It should be noted that the concept of male or female thread differs for protectors compared to tubular threaded components.

Indeed, a protector is called male or female in relation to the threaded end for which it is intended.

For example, a protector will be male if it is intended to be screwed and to protect a male tubular threaded component. The protector will be said to be female if it must correspond to a female tubular threaded component.

The size of a tubular threaded component can be relatively long (including about ten meters in length), for example a tube, a tubular sleeve a few tens of centimeters long, or an accessory of these tubular components (suspension device or "hanger", part of change of section or "cross-over", safety valve, drill rod connector or "tool joint", "sub", and the like).

The above tubular threaded components may have a threaded male end that is intended to be screwed to a threaded female end of another drilling or operating tubular component. It is therefore essential that their male and female extremities are as little as possible damaged, polluted and deteriorated between the time they leave their production line and the time they are used, but also between two successive uses.

It will be understood that it is indeed necessary to protect against corrosion, dust and shocks (or blows) or other types of damages all the functional surfaces of a threaded tubular component, said functional surfaces comprising for instance the thread(s), the sealing surfaces(s) and also abutment(s) which each have specific and complementary functions, in particular with a view to ensuring the sealing during the use phase.

Protectors are devices which function is to protect the functional surfaces mentioned above of a threaded tubular component as well as any coating present on said functional surfaces.

The solution generally suitable for securing a protector on a tubular component is to screw it on the thread of said tubular component. This solution allows a simple mounting gesture associated with precise positioning.

Therefore, the protector may have threads suitable for being screwed onto the threads of a male or female tubular threaded component. The thread(s) can be of the same type and have the same thread step as of for the tubular threaded component. Protector threads may comprise engagement flanks facing the free end of the protector, said engagement flanks being intended to come into contact with engagement flanks of the threads of a tubular threaded component when screwing the protector on the tubular threaded component. Said protector threads may also comprise a loading flank, a thread crest and a thread root as well as an abutment.

In some cases, protectors have been equipped with sealing means to reinforce the tightness of spaces including functional surfaces of a tubular threaded component (with or without coating(s)) against moisture, condensation water flow or air.

US4429719 is known, it describes a pipe thread protector designed to safeguard the threads of a pipe section. It features a dual-member structure with a vacuum mechanism that locks the gripping means in place, ensuring secure engagement with the pipe threads during use.

Also, JP H02113197 discloses a protector for a steel pipe screw, said protector is formed by a multi-split inner case having a screw formed on the inner peripheral surface, a cylindrical reinforcing metallic pipe, an outer case pressed to the outside of the inner case, and a cover for covering the outer surface of the end portion of the inner case.

Moreover, US2021/172560 discloses a thread protector for threads of the pipe with a collet having an inner surface, and outer surface and an end surface, a sleeve cooperative with the collet, and an arm pivotally mounted to the sleeve.

However, it is well known that a protector itself can suffer damages during or after accomplishing its protection function. Indeed, some of them are damaged in the exterior because of the numerous shocks between the tubular threaded component during transportation from the factory to the operating site, or because of the screwing operation which can damage irreversibly the protector's threads. Both rendering the protector unsuitable for another operation, and therefore said protector is considered as a waste and must be completely discarded.

Therefore, there is a real need to develop a protector capable to solve the above-mentioned problems, in particular to develop a protector that can be reused and not discarded after being damaged or after the screwing operation.

### Summary

The invention makes it possible to solve the above-mentioned problem.

In particular, the invention proposes a solution of a protector male or female which can enable the reuse of non-damaged parts instead of discarding the whole protector. The invention also proposes a protector that can be adapted to various type of threads of tubular threaded components. The invention is defined by the independent claim and further aspects of the invention are defined in the dependent claims.

The invention provides a protector for a tubular threaded component for drilling as defined in claim 1.

According to an embodiment, the threaded area of said second cylindrical element may be configured to cooperate with the threads of tubular threaded component in a mounted state.

According to an embodiment, the protector is characterized in that said assembling guide when on the second external surface may be configured to cooperate, in an assembled state, with the at least first assembling guide being arranged on the first inner surface, or said assembling guide when on the second inner surface may be configured to cooperate, in an assembled state, with the at least first assembling guide being arranged on the first external surface.

Thanks to these characteristics, each individual part such as the cap element, the first cylindrical and/or the second cylindrical elements may be replaced individually. Therefore, if one of these elements is damaged, the user can discard only said damaged element and recycle the remaining elements. This furtherly enable to reduce cost and material consumption.

Thanks to these characteristics, the assembling guides, which corresponds one to another, enables a translation or a slippage of one of the first or the second cylindrical element into the other for mounting or unmounting purposes. The assembling guides enables as well to block any rotation of a cylindrical element around the other which stabilize the whole protector. The assembling guides enables the removability of a cylindrical element.

Thanks to these characteristics, the threaded area can be machined directly on the second inner or the second external surface of the second cylindrical element. The threaded area can present a large variety of threads according to the type of threads of a tubular threaded component for which a protector is needed. The user according to the threads needed unmount the second cylindrical element and replace it with another one comprising the appropriate threads. Thus, this enable the protector to be adapted universally to all tubular threaded elements.

According to an embodiment, the protector is characterized in that the first assembling guide may be of the type of a protuberance configured to cooperate with the at least second assembling guide being of the type of a groove, or said at first assembling guide may be of the type of a groove configured to cooperate with the at least second assembling guide being of the type of a protuberance.

According to an embodiment, said first assembling guide may comprise at least a first frontal bearing surface and at least a first lateral bearing surface, and said second assembling guide may comprise at least a second frontal bearing surface and at least a second lateral bearing surface.

Thanks to these characteristics, the assembling guides will receive the torque when applying a mechanical force. Indeed, in an assembled state a first frontal bearing surface of a protuberance will bear on a second frontal bearing surface of the groove. Thus, enabling a first assembling guide to slide on a second assembling guide.

Thanks to these characteristics, a protuberance, thanks to its lateral bearing surface is configured to face and to bear accordingly on a second lateral bearing surface of a second assembling guide being a groove. Therefore, during the assembling of the first- and second-cylinder elements the first lateral bearing surface will bear on the second lateral bearing surface. Such bearing action stops the second assembling guides from any rotational movement as it will be structurally blocked.

According to an embodiment, the protector is characterized in that:
- the first locking mechanism may be of the type of a hosting cavity configured to host the second locking mechanism, and said first locking mechanism comprising additionally a holding mechanism configured to retain a second locking mechanism being of the type of a hook or a longitudinal bar,
- or in that the second locking mechanism may be of the type of a hosting cavity configured to host the first locking mechanism, and said second locking mechanism comprising additionally a holding mechanism, said first locking mechanism being of the type of a hook or a longitudinal bar.

According to an embodiment, the protector is characterized in that said holding mechanism may be a shoulder or a rib.

Thanks to these characteristics, a hosting cavity can host any element that is suitable to be fitted inside said hosting cavity such as a a hook or a longitudinal bar. The holding mechanism will retain any fitted element inside the hosting cavity, resulting in a mechanical installation and connection of two separate elements such as the cap element and the first cylindrical element. In particular, a hook or a longitudinal bar, enables to stop the rotation of a cap element around the first cylindrical element as they will be rotationally blocked by the side walls of the hosting cavity. The hook or a longitudinal bar further enables to stop any axial displacement of the cap element as it is retained thanks to the holding mechanism.

Thanks to these characteristics, a holding mechanism may impede or block any unwanted dismounting of the first cylindrical element from the cap element, once said elements are fixed thanks to the first and second locking mechanisms.

According to the claimed invention, the protector is characterized in that the second cylindrical element comprises a third locking mechanism and in that the first cylindrical element comprises at least a through hole configured to receive said third locking mechanism.

Thanks to these characteristics, the second cylindrical element will remain tightly locked inside the first cylindrical element. In particular, in a mounted state, the third locking mechanism and a through hole present on the first cylindrical element enable to block said second cylindrical element from translating back into an unmounted state.

According to an embodiment, the protector is characterized in that said second cylindrical element may comprise at least a flexible flap hosting said third locking mechanism.

Thanks to these characteristics, the flexible flap enables a fast release of the third locking mechanism from the through hole, therefore, a fast release of the first cylindrical element from the second cylindrical element. Thanks to the flexible flap, no tool is required, and the release can be activated manually.

According to an embodiment, the protector is characterized in that said third locking mechanism may be of the type of a tab, a protuberance, or a longitudinal bar.

Thanks to these characteristics, a tab, a protuberance, or a longitudinal bar may fit into a matching through hole, and present sufficient resistance to restrain mechanically any axial displacement of the first cylindrical element into the second cylindrical element. A tab, a protuberance, or a longitudinal bar enables also to block the rotation of the first cylindrical element around the second cylindrical element in a mounted state.

According to an embodiment, the protector is characterized in that the material of the first cylindrical element may be different than the material of the second cylindrical element.

Thanks to these characteristics, different materials means that a user can select more suitable materials according to the situation and the user's need (for example cheaper materials). In particular, the threads of a protector can be easily damaged, and a user can choose a reinforced material in comparison to the first cylindrical or by the contrary prefer spending costless material for a single utilization of the second cylindrical element.

According to an embodiment, the protector is characterized in that the material of the second cylindrical element may be different than the material of the cap element.

Thanks to these characteristics, a cap element can be selected with a more robust material than the first cylindrical element as it's one of the most exposed parts of the protector.

According to an embodiment, the protector is characterized in that said cap element may comprise a bumper surrounding axially and/or radially said cap element.

Thanks to these characteristics, a bumper has a function of protecting a protector from all incoming shocks or blows, especially during transportation or bottling, by absorbing them.

According to an embodiment, the protector is characterized in that said bumper may form with the cap element a unique piece having same material.

According to another embodiment, the protector is characterized in that said bumper can be removable from the cap element.

Thanks to these characteristics, said removable bumper may have same or different material than the cap element, thus enabling to adapt the hardness or the cost of such material. As a bumper can also be damaged with time, it is possible to change only this part and conserve the remaining parts of the protector such as the cap element. Therefore, in this case, the bumper can be replaced only instead of the whole cap element, enabling further cost saving resources.

According to an embodiment, the protector is characterized in that the second cylindrical element may comprise a sealing device located on the second inner surface of said second cylindrical element.

According to an embodiment, the protector is characterized in that the second cylindrical element comprising the second inner surface with the threaded area may comprise a sealing device located on said inner surface, said sealing device configurated to bear on the external surface of a threaded tubular component in a mounted state.

Thanks to these characteristics, a sealing device reinforce the tightness of spaces including functional surfaces such as threads, sealing surfaces and abutments, with or without coating(s), of a connection against moisture, condensation water flow or air.

The invention also provides with a tubular threaded component comprising a protector according to any of the above-mentioned embodiments.

### Brief description of the figures:

The invention will be better understood, and other purposes, details, characteristics and advantages of the invention will become clearer during the following description of several particular embodiments of the invention, given only for illustrative and non-limiting purposes, with reference to the annexed drawings.
[fig. 1] Figure 1 discloses a male protector according (unassembled) to the invention in an exploded view.
[fig. 2] Figure 2 discloses a cap element of a protector according to the invention.
[fig. 3] Figure 3 discloses a flexible flap according to the invention.
[fig. 4] Figure 4 discloses a portion of an assembled protector, according to the invention, mounted on a tubular threaded component, in a longitudinal view.
[fig. 5] Figure 5 discloses a female protector (unassembled) according to the invention, in an exploded view.
[fig. 6] Figure 6 discloses a first assembling guide according to the invention.
[fig. 7] Figure 7 discloses a second assembling guide according to the invention.

### Definition(s) :

The following terms are defined in the light of the invention.

Cylindrical: a surface traced by a straight line moving parallel to a fixed straight line and intersecting a fixed planar closed curve.

Protuberance: A structural element that is thrusting out from a surrounding or adjacent surface. A protuberance admits bearing surfaces.
Tab: Tenon of a certain length intended to fit into a groove and generally ensure a slide connection. A tenon admits bearing surfaces.

Assembled state: must be understood as all different elements of a protector according to the invention are assembled together. For example, the cap element, the first cylindrical element and/or the second cylindrical element being all cooperating and assembled together thanks to the locking mechanisms and the assembling guides.

Mounted state: has to be understood as an assembled state of the protector mounted directly on a tubular threaded component.

### Description of the embodiments:

In the description and claims, the terms "outer" / "external" or and "inside" / "inner" and the orientations "axial" and "radial" shall be used to designate, according to the definitions given in the description, elements of the protector or the tube. The longitudinal axis X determines the "axial" orientation. The "radial" orientation is directed orthogonally to the longitudinal axis X. The "circumferential" orientation is directed orthogonal to the axis X of rotation and orthogonal to the radial direction, i.e., orthoradially. The terms "outer"/ "external" or "inside"/"inner" are used to define the orientation or the relative position of one component with respect to another, with reference to the longitudinal axis X. A component close or facing said axis is referred to as inside or inner as opposed to an outside or outer component located radially at the periphery or facing away the longitudinal axis X.

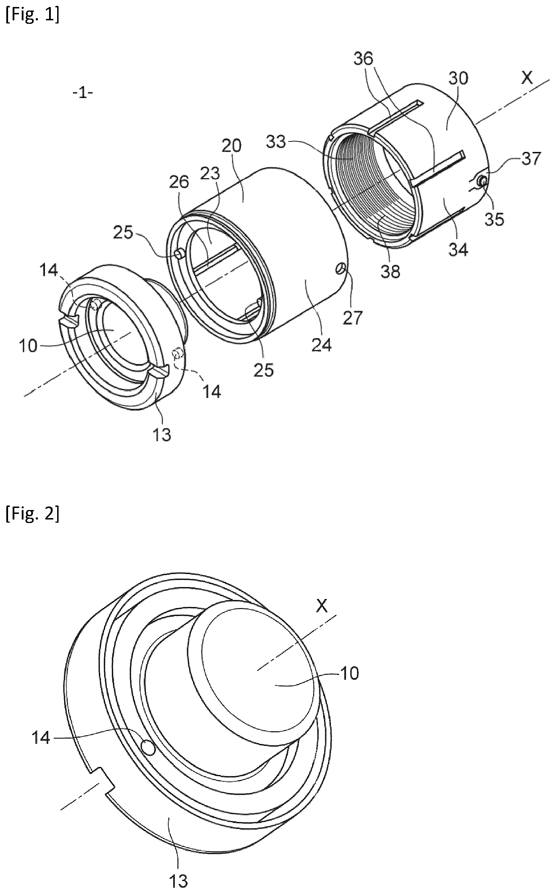

Figure 1 shows a protector according to the invention configured to cooperate with a male tubular component. Said protector (1) comprises a cap element (10), a first cylindrical element (20) and a second cylindrical element (30). The cap element (10) comprises a bumper (13), said cap element (10) and bumper (13) are both in one piece and one material.

The cap element (10) also comprises at least a first locking element (14), said first locking element is configured to host and fix a second locking element (25) of the first cylindrical element (20).

In this figure, the second locking element (25) is of the type of longitudinal bar that can match and fit inside the first locking element (14).

The invention also admits a variation wherein the second locking element (25) is of the type of a protuberance or a hook.

The first cylindrical element (20) comprises a first inner surface (23), turned inwardly, and a first external surface (24) turned outwardly. Said first cylindrical element (20) comprises an assembling guide (26) being arranged on the first inner surface (23).

The first cylindrical element (20) comprises a though hole (27) between the first inner surface (23) and the first external surface (24).

The second cylindrical element (30) comprises an inner surface (33) and a second external surface (34). The second inner surface (33) is suitable to comprise threads which form the threaded area (38). Said threaded area is configured to match with the threads of a tubular threaded component in a mounted state. Therefore, a user can select a second cylindrical element with the threaded area (38) according to the tube that needs a protection. Once used, if the user wishes to reuse or recycle the other elements, such as the cap and/or the first cylindrical element of the protector on another tubular threaded component having different threads, said user can simply discard the second cylindrical element and select another one with fitting threads. Thus, this enable the protector to be adapted universally to all tubular threaded elements.

The invention also admits a variation wherein the second external surface (34) comprises both the threaded area (38) and the second assembling guide (36). In this case the protector is configured to cooperate with a female tubular threaded component.

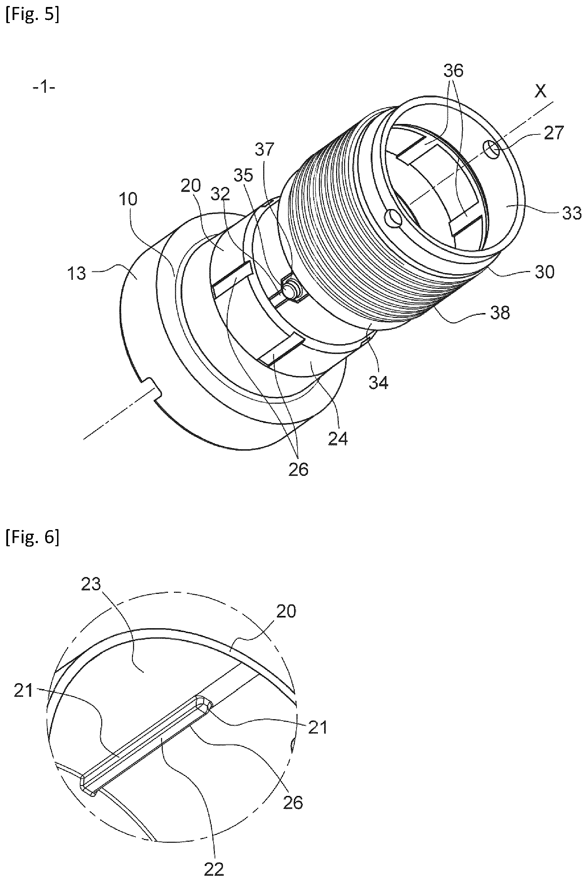

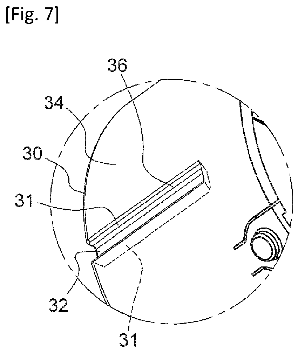

The first cylindrical element (20) comprises a first assembling guide (26) and second cylindrical element (30) comprise second assembling guide (36). Said first and second assembling guides (26, 36) are configured to match one to each other. Figure 6 and 7 provides more details about the structure and functions of said assembling guides (26, 36).

In this figure 1, the first assembling guide (26) is configured to be on the inner surface (23) of the first cylindrical element (20), while the second assembling guides (36) is configured to be on the second external surface (34) of the second cylindrical element (30).

The invention also admits variations in which the first assembling guide and second assembling guide are reverted. Meaning that the first assembling guide is a groove while the second assembling guide is a protuberance.

The separately illustrated elements (10, 20, 30) in figure 1 shows how each of these elements can be dismounted or mounted separately one to each other and therefore highlights the removable and replaceable characteristics.

The second cylindrical element comprises a third locking mechanism (35) that is intended to be fit inside the through hole (27) of the first cylindrical element (20).

The second cylindrical element (30) comprises a flexible flap (37) wherein said third locking element (35) is embedded. When assembling the first- and second-cylindrical element (20, 30), said flexible flap (37) will ensure and facilitate an easy way for the third locking element (35) to fit inside the though hole (27).

Indeed, the flexible flap (37) can bend inside of the second cylindrical element (30) when pressing said flexible flap. Said pressure can be either applied manually or by a pushing contact thanks to the first inner surface (23) of the first cylindrical element (20). Indeed, as the third locking mechanism is in solidarity with the flexible flap, said first inner surface (23) when coming into contact of said third locking element will create a pushing contact. The flexible flap being less rigid than the first inner surface (23) will bend in the opposing direction of the pushing contact thus pulling in the same direction the third locking mechanism (35) until said third locking mechanism (35) meet the through hole (27).

Such connection of a third locking mechanism (35) inside the though hole (27) enables to block any axial displacement as it creates a structural blocking, this further enables to lock the first cylindrical element and the second cylindrical element together. The only way to release said cylindrical elements is to push mechanically the third locking element (35) back inside and to translate the cylindrical elements (20, 30) in an unmounted position. In this figure, the third locking mechanism (35) is a longitudinal bar.

The invention admits other variations wherein a locking mechanism can be a protuberance, or any element that can fit inside the through role (27) in order to lock the cylindrical elements (20, 30) together or to release said cylindrical elements (20, 30) by pressing inside the third locking mechanism (35).

This enables a user to assemble and lock the cylindrical elements (20, 30), or unlock them, manually.

Figure 2 shows a cap element (10) of a protector (1). The cap element (10) comprises a first locking mechanism (14), said first locking element (14) is configured to fix the second locking element (not shown) of the first cylindrical element (not shown) in an assembled state. In this figure, the first locking mechanism (14) is a hosting cavity.

The cap element (10) comprises bumper (13) surrounding axially and radially said first cap element (10).

In this figure it is admitted that said bumper has same material than the cap. However, the invention admits variation in which the material of the bumper is different than the bumper allowing a user to select different type of hardness for different type of situations. Therefore, in this case, the bumper that is not in a single piece with the cap element, can be replaced only instead of the whole cap element, enabling further cost saving resources. Therefore, the bumper is removable.

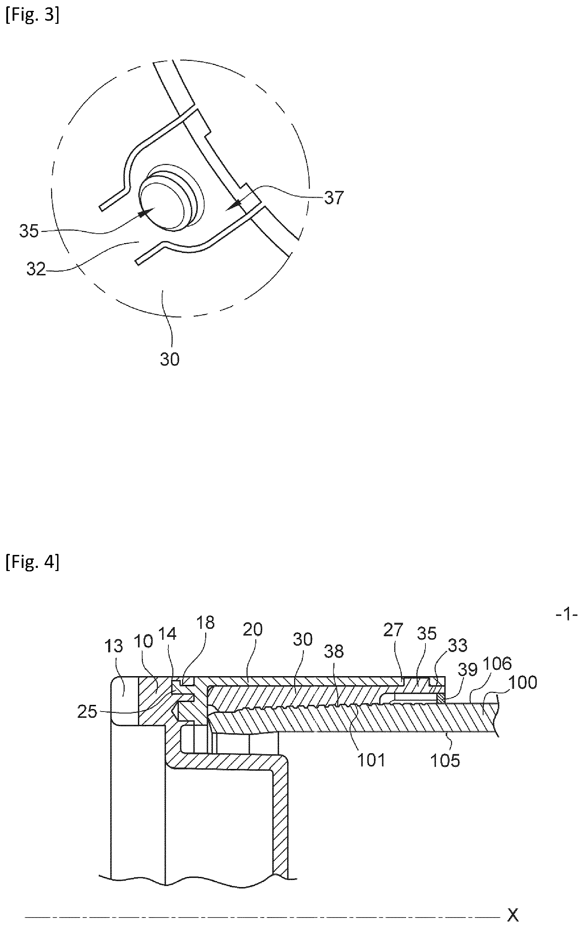

Figure 3 shows a flexible flap according to the invention from an enlargement view of the second cylindrical element in figure 1.
All developments about the flexible flap in figure 1 are therefore valid for figure 3.

Figure 3 shows more precisely that the flexible flap (37) is part of the second cylindrical element (30) linked together through a thin band (32) of same or different material. Said thin band (32) is elastically deformable and facilitate the inclination of the flexible flap (37).

The flexible flap (37) can be obtained by machining the second cylindrical element or by additive manufacturing.

Figure 4 shows an assembled protector (1), according to the invention, mounted on a tubular threaded component (100), in a longitudinal view. Said tubular threaded component (100) comprise an inner surface (105) and an external surface (106).

The protector (1) comprises a cap element (10), a first cylindrical element (20) and a second cylindrical element (30). All said elements (10, 20, 30) are in an assembled state. The cap element (10) comprises a bumper (13), said cap element (10) and bumper (13) are both in one single piece and one material.

The threaded area (38) of the protector (1) cooperates with the threaded area (101) of said tubular threaded component (100) to reach a mounted state.

This figure shows in particular the cooperation between the first locking mechanism (14) and second locking mechanism (25). Indeed, said first locking mechanism (14) being a hosting cavity and said second locking mechanism (25) being a hook.

Said hosting cavity (14) comprises a holding mechanism (18) configured to retain the hook. In this figure, the holding mechanism (18) is a shoulder, but the invention admits another embodiment in which said holding mechanism is a rib. Once the hook is fitted inside the hosting cavity (14), if the hook displace itself axially it will be retained inside said hosting cavity as it will face structurally the rib, said rib applying an opposing axial force to maintain said hook inside the hosting cavity (14).

The second cylindrical element (30) comprises a sealing device (39) located on an end of said second inner surface (33). Said sealing device (39) will ensure the protection of the functional surfaces of the threaded tubular component (100). Indeed, the sealing device (39) reinforce the tightness of spaces including functional surfaces such as the threads of a tubular threaded component (with or without coating(s)) against moisture, condensation water flow or air. In a mounted state, the sealing device (39) will act as blocking wall by filling any void left between the second inner surface (33) of a second cylinder element (30) and the external surface (106) of a threaded tubular component (100). In a preferred manner the sealing device (39) is placed

The invention also admits other embodiments in which the first and second locking mechanism as described in all previous figures are reverted.

Figure 5 shows a protector according to the invention configured to cooperate with a female tubular component.

All previous development concerning a protector configured to cooperate with a male tubular component is valid for a protector configured to cooperate with a female tubular component. The difference with figure 1 remains in the position of the threaded area and the assembling guides.

Indeed, the protector (1) comprises a first cylindrical element (20) having a first inner surface (23) turned inwardly, and a first external surface (24) turned outwardly, said assembling guide (26) being arranged on the external surface (24).

The protector (1) also comprises a second cylindrical element (30) having a second inner surface (33) turned inwardly, and a second external surface (34) turned outwardly. Said second inner surface (33) comprises second assembling guides (36) configured to cooperate, in an assembled state, with the at least first assembling guide (26). The second external surface (34) comprises a threaded area 38.

The invention also admits a variation wherein the second inner surface (33) comprises both the threaded area (38) and the assembling guides (36). In this case the protector is configured to cooperate with a male tubular threaded component. In this configuration, the threaded area doesn't overlap the assembling guides area.

Figure 6 shows a first enlargement from figure 1 of a first assembling guide (26) of first cylindrical element (20). Said first assembling guide (26) is of the type of a protuberance. Said first assembling guide (26) comprises at least a first frontal bearing surface (22) and at least a first lateral bearing surface (21). Each first lateral bearing surface (21) admits at least a junction point with the first frontal bearing surface (22).

Figure 7 shows a second enlargement from figure 1 of a second assembling guides (36) of the second cylindrical element (30).

Said second assembling guide (36) is of the type of a groove. Said second assembling guide (36) comprises at least a second frontal bearing surface (32) and at least a second lateral bearing surface (31). Each second lateral bearing surface (21) admits at least a junction point with said second frontal bearing surface (22).

The first assembling guide (26) of figure 1 and 6 is configured to cooperate, in an assembled state, with the at the second assembling guide (36).

Such cooperation is fulfilled thanks to the matching form of the first and second assembling guide (26,36). Indeed, the first frontal bearing surface (22) of a first assembling guide (26) is configured to bear on the second frontal bearing surface (32) of a second assembling guide (36) in an assembled state. Thus, the first assembling guide (26) will slide on the second assembling guide (36).

In an assembled state, each first lateral bearing surface (21) of the first assembling guide (26) is configured to face and to bear accordingly on a second lateral bearing surface (31). Therefore, during the assembling of the first- and second-cylinder elements (20, 30) the first lateral bearing surface (21) will bear on the second lateral bearing surface (31). Such bearing action stops the second assembling guides (36) from any rotational movement as it will be structurally blocked. Therefore, the configuration of the assembling guides (26, 36) enables to block any rotational movement of a cylinder around the other.

The complementarity of forms of the first and second assembling guides (26, 36) enables a user to slide one into the other thanks to a manual action and an axial placement or displacement.

However, the invention admits a variation wherein a second assembling guide is on the second inner surface and is configured to cooperate, in an assembled state, with the at least first assembling guide being arranged on the first external surface.

The invention also admits a variation wherein a second assembling guide is of the type of the protuberance while a first assembling guide is of the type of a groove. This variation applies for above-mentioned and following described configurations.

## Claims

1. Protector (1) for tubular threaded component (100) for drilling, exploitation of hydrocarbon wells, transport of oil and gas, transport or storage of hydrogen, carbon capture or geothermal energy, said protector (1) comprising:
- a cap element (10) comprising at least a first locking mechanism (14),
- a first cylindrical element (20) comprising at least a second locking mechanism (25), said second locking mechanism (25) configured to cooperate, in an assembled state, with the first locking mechanism (14) of the cap element (10), said first cylindrical element (20) comprising a first assembling guide (26), a first inner surface (23) turned inwardly, and a first external surface (24) turned outwardly, said first assembling guide (26) being arranged either on the first inner surface (23) or on the first external surface (24).
- a second cylindrical element (30) comprising at least a second assembling guide (36), a second inner surface (33) turned inwardly, and a second external surface (34) turned outwardly, said second assembling guide (36) being arranged either on the second external surface (34) or on the second inner surface (33), said second inner surface (33) or said second external surface (34) comprises a threaded area (38), **characterized in that** the second cylindrical element (30) comprises a third locking mechanism (35) and **in that** the first cylindrical element (20) comprises at least a through hole (27) configured to receive said third locking mechanism (35).

2. Protector (1) according to claim 1 **characterized in that** said assembling guide (36) when on the second external surface (34) is configured to cooperate, in an assembled state, with the at least first assembling guide (26) being arranged on the first inner surface (23), or said assembling guide (36) when on the second inner surface (33) is configured to cooperate, in an assembled state, with the at least first assembling guide (26) being arranged on the first external surface (24).

3. Protector (1) according to any of the preceding claims **characterized in that** the first assembling guide (26) is of the type of a protuberance configured to cooperate with the at least second assembling guide (36) being of the type of a groove, or said at first assembling guide (26) is of the type of a groove configured to cooperate with the at least second assembling guide (36) being of the type of a protuberance.

4. Protector (1) according to any of the preceding claims **characterized in that**:
- the first locking mechanism (14) is of the type of a hosting cavity configured to host the second locking mechanism (25), and said first locking mechanism (14) comprising additionally a holding mechanism (18) configured to retain a second locking mechanism (25) being of the type of a hook or a longitudinal bar,
- or **in that** the second locking mechanism (25) is of the type of a hosting cavity configured to host the first locking mechanism (14), and said second locking mechanism (25) comprising additionally a holding mechanism (18), said first locking mechanism (14) being of the type of a hook or a longitudinal bar.

5. Protector (1) according to claim 4, **characterized in that** said holding mechanism (18) is a shoulder or a rib.

6. Protector (1) according to claim 1 **characterized in that** said second cylindrical element (30) comprises at least a flexible flap (37) hosting said third locking mechanism (35).

7. Protector (1) according to claims 1 or 6 **characterized in that** said third locking mechanism (35) is of the type of a tab, a protuberance, or a longitudinal bar.

8. Protector (1) according to any of the preceding claims **characterized in that** the material of the first cylindrical element (20) is different than the material of the second cylindrical element (30).

9. Protector (1) according to any of the preceding claims **characterized in that** the material of the second cylindrical element (30) is different than the material of the cap element (10).

10. Protector (1) according to any of the preceding claims **characterized in that** said cap element (10) comprises a bumper (13) surrounding axially and/or radially said cap element (10).

11. Protector (1) according to any of the preceding claims **characterized in that** the second cylindrical element (30) comprising the second inner surface (33) with the threaded area (38) comprises a sealing device (39) located on said inner surface (33), said sealing device (39) configurated to bear on the external surface (106) of a threaded tubular component (100) in a mounted state.

12. Tubular threaded component (100) comprising a protector (1) according to any of claims 1 to 11.

## Patentansprüche

1. Schutzelement (1) für ein rohrförmiges Gewindebauteil (100) zur Bohrung, Erschließung von Kohlenwasserstoffbohrungen, zum Transport von Öl und Gas, zum Transport oder zur Speicherung von Wasserstoff, CO₂-Abscheidung oder zur geothermischen Energiegewinnung, wobei das Schutzelement (1) umfasst:
- ein Kappenelement (10), das mindestens einen ersten Verriegelungsmechanismus (14) umfasst,
- ein erstes zylindrisches Element (20), das mindestens einen zweiten Verriegelungsmechanismus (25) umfasst, wobei der zweite Verriegelungsmechanismus (25) dazu ausgelegt ist, in einem montierten Zustand mit dem ersten Verriegelungsmechanismus (14) des Kappenelements (10) zusammenzuwirken, wobei das erste zylindrische Element (20) eine erste Montageführung (26), eine nach innen gewandte erste Innenfläche (23) und eine nach außen gewandte erste Außenfläche (24) umfasst, wobei die erste Montageführung (26) entweder an der ersten Innenfläche (23) oder an der ersten Außenfläche (24) angeordnet ist,
- ein zweites zylindrisches Element (30), das mindestens eine zweite Montageführung (36), eine nach innen gewandte zweite Innenfläche (33) und eine nach außen gewandte zweite Außenfläche (34) umfasst, wobei die zweite Montageführung (36) entweder an der zweiten Außenfläche (34) oder an der zweiten Innenfläche (33) angeordnet ist, wobei die zweite Innenfläche (33) oder die zweite Außenfläche (34) einen Gewindebereich (38) umfasst, **dadurch gekennzeichnet, dass** das zweite zylindrische Element (30) einen dritten Verriegelungsmechanismus (35) umfasst und dass das erste zylindrische Element (20) mindestens ein Durchgangsloch (27) umfasst, das dazu ausgelegt ist, den dritten Verriegelungsmechanismus (35) aufzunehmen.

2. Schutzelement (1) nach Anspruch 1, **dadurch gekennzeichnet, dass** die Montageführung (36), wenn sie sich auf der zweiten Außenfläche (34) befindet, dazu ausgelegt ist, in einem montierten Zustand mit der mindestens ersten Montageführung (26), die auf der ersten Innenfläche (23) angeordnet ist, zusammenzuwirken, oder die Montageführung (36), wenn sie sich auf der zweiten Innenfläche (33) befindet, dazu ausgelegt ist, in einem montierten Zustand mit der mindestens ersten Montageführung (26), die auf der ersten Außenfläche (24) angeordnet ist, zusammenzuwirken.

3. Schutzelement (1) nach einem der vorhergehenden Ansprüche, **dadurch gekennzeichnet, dass** die erste Montageführung (26) von der Art eines Vorsprungs ist, der dazu ausgelegt ist, mit der mindestens zweiten Montageführung (36) zusammenzuwirken, die von der Art einer Nut ist, oder die mindestens erste Montageführung (26) von der Art einer Nut ist, die dazu ausgelegt ist, mit der mindestens zweiten Montageführung (36) zusammenzuwirken, die von der Art eines Vorsprungs ist.

4. Schutzelement (1) nach einem der vorhergehenden Ansprüche, **dadurch gekennzeichnet, dass**:
- der erste Verriegelungsmechanismus (14) von der Art eines Aufnahmehohlraums ist, der dazu ausgelegt ist, den zweiten Verriegelungsmechanismus (25) aufzunehmen, und wobei der erste Verriegelungsmechanismus (14) zusätzlich einen Haltemechanismus (18) umfasst, der dazu ausgelegt ist, einen zweiten Verriegelungsmechanismus (25) zu halten, der von der Art eines Hakens oder einer Längsstange ist,
- oder dadurch, dass der zweite Verriegelungsmechanismus (25) von der Art eines Aufnahmehohlraums ist, der dazu ausgelegt ist, den ersten Verriegelungsmechanismus (14) aufzunehmen, und wobei der zweite Verriegelungsmechanismus (25) zusätzlich einen Haltemechanismus (18) umfasst, wobei der erste Verriegelungsmechanismus (14) von der Art eines Hakens oder einer Längsstange ist.

5. Schutzelement (1) nach Anspruch 4, **dadurch gekennzeichnet, dass** der Haltemechanismus (18) eine Schulter oder eine Rippe ist.

6. Schutzelement (1) nach Anspruch 1, **dadurch gekennzeichnet, dass** das zweite zylindrische Element (30) mindestens eine flexible Klappe (37) umfasst, die den dritten Verriegelungsmechanismus (35) aufnimmt.

7. Schutzelement (1) nach Anspruch 1 oder 6, **dadurch gekennzeichnet, dass** der dritte Verriegelungsmechanismus (35) von der Art einer Lasche, eines Vorsprungs oder einer Längsstange ist.

8. Schutzelement (1) nach einem der vorhergehenden Ansprüche, **dadurch gekennzeichnet, dass** das Material des ersten zylindrischen Elements (20) von dem Material des zweiten zylindrischen Elements (30) verschieden ist.

9. Schutzelement (1) nach einem der vorhergehenden Ansprüche, **dadurch gekennzeichnet, dass** das Material des zweiten zylindrischen Elements (30) von dem Material des Kappenelements (10) verschieden ist.

10. Schutzelement (1) nach einem der vorhergehenden Ansprüche, **dadurch gekennzeichnet, dass** das Kappenelement (10) einen Stoßfänger (13) umfasst, der das Kappenelement (10) axial und/oder radial umgibt.

11. Schutzelement (1) nach einem der vorhergehenden Ansprüche, **dadurch gekennzeichnet, dass** das zweite zylindrische Element (30), das die zweite Innenfläche (33) mit dem Gewindebereich (38) umfasst, eine Dichtungsvorrichtung (39) umfasst, die auf der Innenfläche (33) angeordnet ist, wobei die Dichtungsvorrichtung (39) so ausgelegt ist, dass sie in einem montierten Zustand an der Außenfläche (106) eines rohrförmigen Gewindebauteils (100) anliegt.

12. Rohrförmiges Gewindebauteil (100), umfassend ein Schutzelement (1) nach einem der Ansprüche 1 bis 11.

## Revendications

1. Protecteur (1) pour composant fileté tubulaire (100) pour forage, exploitation de puits d'hydrocarbures, transport de pétrole et de gaz, transport ou stockage d'hydrogène, captage de carbone ou géothermie, ledit protecteur (1) comprenant :
- un élément formant coiffe (10) comprenant au moins un premier mécanisme de verrouillage (14),
- un premier élément cylindrique (20) comprenant au moins un deuxième mécanisme de verrouillage (25), ledit deuxième mécanisme de verrouillage (25) étant configuré pour coopérer, dans un état assemblé, avec le premier mécanisme de verrouillage (14) de l'élément formant coiffe (10), ledit premier élément cylindrique (20) comprenant un premier guide d'assemblage (26), une première surface intérieure (23) tournée vers l'intérieur, et une première surface extérieure (24) tournée vers l'extérieur, ledit premier guide d'assemblage (26) étant disposé soit sur la première surface intérieure (23) soit sur la première surface extérieure (24),
- un second élément cylindrique (30) comprenant au moins un second guide d'assemblage (36), une seconde surface intérieure (33) tournée vers l'intérieur, et une seconde surface extérieure (34) tournée vers l'extérieur, ledit second guide d'assemblage (36) étant disposé soit sur la seconde surface extérieure (34) soit sur la seconde surface intérieure (33), ladite seconde surface intérieure (33) ou ladite seconde surface extérieure (34) comprenant une région filetée (38), **caractérisé en ce que** le second élément cylindrique (30) comporte un troisième mécanisme de verrouillage (35) et **en ce que** le premier élément cylindrique (20) comprend au moins un trou traversant (27) configuré pour recevoir ledit troisième mécanisme de verrouillage (35).

2. Protecteur (1) selon la revendication 1, **caractérisé en ce que** ledit guide d'assemblage (36), lorsqu'il est situé sur la seconde surface extérieure (34), est configuré pour coopérer, dans un état assemblé, avec l'au moins un premier guide d'assemblage (26) disposé sur la première surface intérieure (23), ou ledit guide d'assemblage (36), lorsqu'il est situé sur la seconde surface intérieure (33), est configuré pour coopérer, dans un état assemblé, avec l'au moins un premier guide d'assemblage (26) disposé sur la première surface extérieure (24).

3. Protecteur (1) selon l'une quelconque des revendications précédentes, **caractérisé en ce que** le premier guide d'assemblage (26) est du type protubérance configurée pour coopérer avec l'au moins un second guide d'assemblage (36) qui est du type rainure, ou ledit premier guide d'assemblage (26) est du type rainure configurée pour coopérer avec l'au moins un second guide d'assemblage (36) qui est du type protubérance.

4. Protecteur (1) selon l'une quelconque des revendications précédentes, **caractérisé en ce que** :
- le premier mécanisme de verrouillage (14) est du type cavité de réception configurée pour recevoir le deuxième mécanisme de verrouillage (25), et ledit premier mécanisme de verrouillage (14) comprenant en outre un mécanisme de retenue (18) configuré pour retenir un deuxième mécanisme de verrouillage (25) qui est du type crochet ou barre longitudinale,
- ou **en ce que** le deuxième mécanisme de verrouillage (25) est du type cavité de réception configurée pour recevoir le premier mécanisme de verrouillage (14), et ledit deuxième mécanisme de verrouillage (25) comprenant en outre un mécanisme de retenue (18), ledit premier mécanisme de verrouillage (14) étant du type crochet ou barre longitudinale.

5. Protecteur (1) selon la revendication 4, **caractérisé en ce que** ledit mécanisme de retenue (18) est un épaulement ou une nervure.

6. Protecteur (1) selon la revendication 1, **caractérisé en ce que** ledit second élément cylindrique (30) comprend au moins une languette flexible (37) comportant ledit troisième mécanisme de verrouillage (35).

7. Protecteur (1) selon la revendication 1 ou 6, **caractérisé en ce que** ledit troisième mécanisme de verrouillage (35) est du type patte, protubérance ou barre longitudinale.

8. Protecteur (1) selon l'une quelconque des revendications précédentes, **caractérisé en ce que** le matériau du premier élément cylindrique (20) est différent du matériau du second élément cylindrique (30).

9. Protecteur (1) selon l'une quelconque des revendications précédentes, **caractérisé en ce que** le matériau du second élément cylindrique (30) est différent du matériau de l'élément formant coiffe (10).

10. Protecteur (1) selon l'une quelconque des revendications précédentes, **caractérisé en ce que** ledit élément formant coiffe (10) comprend un butoir (13) entourant axialement et/ou radialement ledit élément formant coiffe (10).

11. Protecteur (1) selon l'une quelconque des revendications précédentes, **caractérisé en ce que** le second élément cylindrique (30) comprenant la seconde surface intérieure (33) avec la région filetée (38) comprend un dispositif d'étanchéité (39) situé sur ladite surface intérieure (33), ledit dispositif d'étanchéité (39) étant configuré pour venir en appui sur la surface extérieure (106) d'un composant fileté tubulaire (100) dans un état monté.

12. Composant fileté tubulaire (100) comprenant un protecteur (1) selon l'une quelconque des revendications 1 à 11.
